# EUROPEAN PATENT APPLICATION

(11) **EP 3 396 543 A1**
(43) Date of publication of application: **31.10.2018**
(21) Application number: 17305468.5
(22) Date of filing: 26.04.2017
(51) Int. Cl.: G06F 9/50

(54) **METHOD TO ALLOCATE/DEALLOCATE RESOURCES ON A PLATFORM, PLATFORM AND COMPUTER READABLE MEDIUM**

(71) Applicant: Nokia Solutions and Networks Oy, 02610 Espoo (FI)
(72) Inventor: RIMAC, Ivica, 70435 STUTTGART BW (DE); AKKUS, Istemi Ekin, 70435 STUTTGART BW (DE); SATZKE, Klaus, 70435 STUTTGART BW (DE); HILT, Volker Friedrich, 70435 STUTTGART BW (DE); CHEN, Ruichuan, 70435 STUTTGART BW (DE); STEIN, Manuel, 70435 STUTTGART BW (DE)
(74) Representative: Berthier, Karine

(57) **Abstract**

Method, platform and computer readable medium to allocate/deallocate resources on a platform. The platform being configured to comprise at least one container, the container being configured to comprise at least one function instance manager, the method comprising a step of instantiating the container within the platform and a step of loading the function instance manager within the container. When a request is received by the function instance manager the method comprising a step of forking the function instance manager to create a function instance and allocating memory resources of the platform to this function instance. When the function instance terminates the method also comprising a step of deallocating the memory resources allocated to this function instance.

## Description

### FIELD OF INVENTION

The present subject matter relates to a method to allocate/deallocate resources on a serverless cloud computing platform. By serverless cloud computing platform we mean a computer or a plurality of computers working together within a cloud to provide services to the developer for executing event-based application code. The present subject matter also relates to a platform.

### BACKGROUND

Serverless computing, also known as Function-as-a-Service (FaaS), involves the platform provider to dynamically provision, manage and orchestrate resources for an event-driven function execution. The unit of computation is a function: unlike VMs and containers, functions are designed to be launched on demand, upon the arrival of a specific type of a request to the platform hosting the function; they are short running processes designed not to continuously require server capacity. Within serverless computing must also present sufficient isolation of function instances against each other. A container is a namespace isolation of a process which runs on a host. When a container is launched, it gets isolated in that it has its own file system, its own networking, and its own isolated process tree separate from the host. In contrast Virtual Machines (VMs) provide an even stronger form of isolation through system-level virtualization (VMs virtualize an entire computer system including virtualized hardware), while containers provide operating system-level virtualization.

Serverless computing is a key enabler for the efficient use of edge clouds. By edge cloud/computing we mean the usage of computing resources at the edges of the network complementary to "conventional" clouds, which are largely centralized computing infrastructure confined to a few data centers. These clouds have fewer resources and benefit less from multiplexing gains in traffic and will therefore need to manage resources efficiently and respond quickly to changes in traffic. Serverless computing systems offering high-speed allocation of functions will further enable the class of low-latency applications such as Virtual Reality or Augmented Reality Systems to effectively use serverless computing.

To take advantage of this model, the platform is responsible for quickly allocating resources once a request arrives and releasing any resources allocated during runtime of a function instance after it is finished executing, including its memory. Thus, the technical problem solved, by the method of the present subject matter, is to enable the platform to allocate and deallocate resources at very high speeds so it can be done as demand arrives/departs while providing sufficient isolation of function instances against each other.

Within this divulgation we will consider that instantiating is creating an example of a type or image; this is a higher-level concept, the implementation of which depends on OS libraries and primitives. E.g., we instantiate a container, i.e., we create a container from a container image, the Docker toolbox provides us a higher-level API so that we don't have to deal with lower-level Linux concepts such as namespace creation etc.; we instantiate a grain worker, i.e., we create an instance of a grain type by UNIX forking from its function instance manager (the function instance manager is an instance itself, but it is the parent process and never executes the loaded function code since this is in the child path of the program). The notion of function instance manager and the grain worker will be described more precisely in the following sections of this divulgation.

Within this divulgation we will consider that spawning is creating and starting a new process, which loads and executes a specified program. In the UNIX world, this is typically implemented by fork plus exec system calls (In computing, exec system calls is a functionality of an operating system that runs an executable file in the context of an already existing process, replacing the previous executable). The fork will create a "clone" of the parent process, and the clone continues execution of the program it shares with its parent. The exec will load then the specified program into the memory of the clone/child process replacing the parents program. This process will then execute the loaded program, typically jumping into the main routine of the program.

Within this divulgation by loading we mean loading of a program or data from storage into memory or context of a process (it is also somewhat overloaded term). E.g an exec loads a program into the memory of its process; a worker process loads the code of a specified function to specialize itself from being generic to become the instance manager for a specific function type.

### SUMMARY

This summary is provided to introduce concepts related to methods dedicated to allocate/deallocate resources on a platform.

In one implementation a method to allocate/deallocate resources on a platform is described. The platform being configured to comprise at least one container, the container being configured to comprise at least one function instance manager, the method comprising a step of instantiating the container within the platform and a step of loading the function instance manager within the container. When a request is received by the function instance manager the method comprising a step of forking the function instance manager to create a function instance and allocating memory resources of the platform to this function instance. When the function instance terminates the method also comprising a step of deallocating the memory resources allocated to this function instance.

In another implementation a platform is described. The platform being configured to comprise at least one container, the container being configured to comprise at least one function instance manager, the platform also comprising a first module configured to instantiate the container within the platform and a second module configured to load the function instance manager within the container and a third module configured to fork the function instance manager to create a function instance and allocating memory resources of the platform to this function instance, when a request is received by the function instance manager and a fourth module configured to deallocate the memory resources allocated to this function instance, when the function instance terminates.

In another implementation a computer-readable medium is described. This computer-readable medium has embodied a computer program configured to realize a method to allocate/deallocate resources on a platform. The platform being configured to comprise at least one container, the container being configured to comprise at least one function instance manager, the method comprising a step of instantiating the container within the platform and a step of loading the function instance manager within the container. When a request is received by the function instance manager the method comprising a step of forking the function instance manager to create a function instance and allocating memory resources of the platform to this function instance. When the function instance terminates the method also comprising a step of deallocating the memory resources allocated to this function instance.

### BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 presents the method of the present subject matter according to a first embodiment.
Figure 2 and 3 present an example of the platform using the method of the present subject matter.
Figure 4 presents the method of the present subject matter according to a second embodiment.
Figure 5 presents the method of the present subject matter according to another embodiment.
Figure 6 presents an embodiment of the step 101 of instantiating and loading the container within the platform
Figure 7 presents a an embodiment of the step 103 of loading the function instance manager within the container
Figure 8 presents a first description of the platform object of the present subject matter.
Figure 9 presents description of the platform object of the present subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

In some embodiments serverless computing services use container technology for isolation: each instance of a function runs in a separate container. A fresh start of a container ("cold" start) includes loading of the runtime, function code, etc. into the container, which can incur startup latencies of up to a few seconds.

In an embodiment, to mitigate the performance penalty for starting and stopping containers, we avoid to release the resources of a container when finished executing an instance of a function, but we preserve it (e.g., for a limited time) afterwards in an inactive state and we reuse it for a "warm" start on a subsequent request. However, while a "warm start (re-use of a container) reduces the startup latency compared to a "cold" start, it still takes a significant amount of time. In term of resource utilization, an inactive container also blocks its allocated memory resources, i.e., it has the same memory footprint as a running container. If the operator wants to take advantage of container re-use for a workflow consisting of several functions (e.g., a sequence of functions), all containers would have to be kept "warm"; thus, consuming significant amount of resources in inactive state.

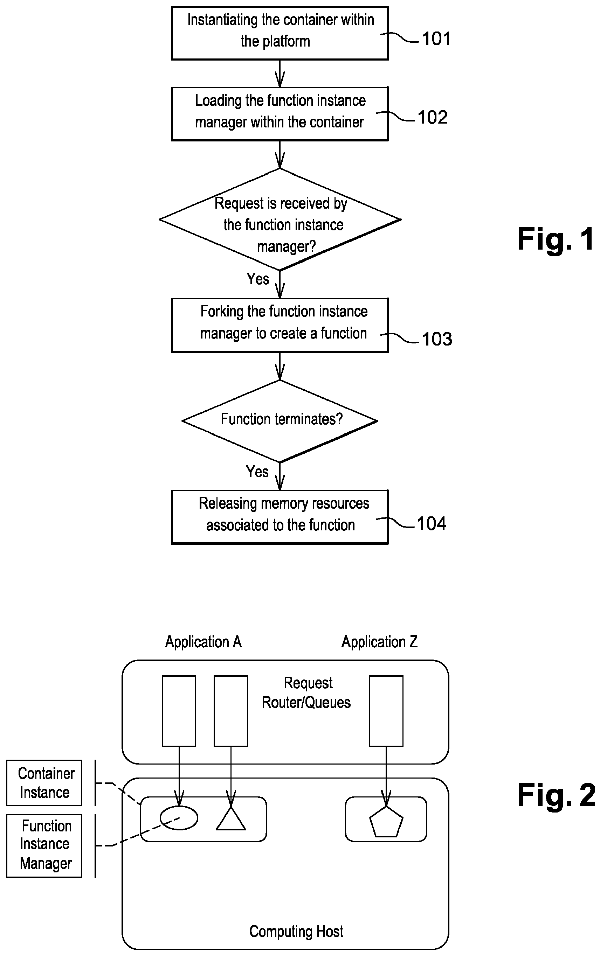

A first embodiment of the present subject matter is a method to allocate/deallocate memory resources on a platform. This platform could be for example a serverless cloud. The platform is configured to comprise at least one container. The container is configured to comprise at least one function instance manager. The method is presented in figure 1 and comprises:
- A step 101 of instantiating the container within the platform
- A step 102 of loading the function instance manager within the container When a request is received by the function instance manager the method comprises:
- A step 103 of forking the function instance manager to create a function instance and allocating memory resources of the platform to this function instance
When the function instance terminates the method also comprises:
- A step 104 of deallocating the memory resources allocated to this function instance.

During the step 101 of instantiating the container, the method can also prepare the container prior to do the instantiation. In an embodiment of the present subject matter Docker tools are used to manage Linux containers and Python is used as the programming language. In this case the step 101 of instantiating the container is also configured to:
- Prepare a container image file, e.g., named "sand/python", which includes the Python runtime and a lean init process.
- Instantiate (=create and start) a new container based on the container image "sand/python":
   $> docker run sand/python &
In this embodiment each container created with the Docker tools is automatically assigned a unique identifier and a unique name; instead of an automatically provided name, we can optionally choose a specific name with the argument "- -name=<CONTAINERNAME>".

This function instance manager comprises a generic part, dedicated to the instantiation of a specific part comprising the instruction of the function. This generic part is also known as "generic worker program", "grain worker", "worker grain", "generic worker". "grainworker.py" is the generic code that every function instance manager loads and executes. The specific part of the function instance manager, is also called the function or the instanced function. In other words the function instance manager is a process that first loads the generic worker program and executes its instructions; one of the instruction is to load the code of a specified function image (but not execute it yet). The arguments, provided to the generic part of the function instance manager when started, determine which specific function it will load and be responsible for, which corresponding message queues it subscribes; i.e., the arguments determine the function instance manager it transforms into. This instantiation of the function being realized by forking the whole function instance manager. The child version of the function instance manager will then only realize the specific part of the patent function instance manager. A function instance manager (FIM) is a process executing a specific function uploaded into the system. Basically, the function instance manager can:
- Dynamically load the function code,
- Subscribe to a message bus, this message bus receiving events,
- Poll events using this message bus
- Fork and execute the function when it receives an event.

In an embodiment, the step 102 of loading the function instance manager within the container is also configured to execute the worker and to load the function code (assuming the grainworker code "grainworker.py" and the function code "function_A.py"is mounted to "/sand" within the container) as follows: $> docker exec CONTAINERNAME "python /sand/grainworker.py --func /sand/function_A.py". This will execute the python grainworker inside the container, which includes instructions to dynamically load the code for the function it is to serve as the instance manager grain=imp.load_source("Function A", "/sand/function_A.py")

The generic worker has now become the instance manager for function A and can handle events for this function. The function code therefore includes methods to subscribe to the corresponding event queues.

In an embodiment the step 103 of forking the function instance manager is configured, for each incoming event, to create a new child process. Since the loaded code from function_A.py provides the code for handling this event type, it is loaded in memory of the function instance manager process. Thus, the latter can create a new subprocess (=function instance) to handle a single event by using UNIX fork. Since no new program needs to be loaded, UNIX forking is a very time and memory efficient method for creating a new process:

```
 msg = LocalQueueClientMessage(...)
 key = msg.key
 value = msg.value
 # special value to stop grain worker
 if key == 0 and value == "--stop":
  self.shutdown ( )
  return
  try:
    instance_pid = os.fork ( )
    if instance_pid == 0:
    # function instance continues here
      ...
      os._exit(0)
    else:
    # instance manager continues here
      self.count += 1
```

By instantiating a container we mean in the broadest sense the creation of a container or application instance and loading the necessary code into memory. Without loss of generality, we start a new instance of a container/application image that runs a lean "init" process, i.e., we create the container/application namespaces and load the minimally necessary code to instantly fork a process when an event needs to be handled.

In computing, particularly but not exclusively in the context of the Unix operating system and its workalikes, fork is an operation whereby a process creates a copy of itself. It is usually a system call, implemented in the kernel. Fork is the primary (and historically, only) method of process creation on Unix-like operating systems.

This invention is based on the insight that creating a new process context for a function invocation is very fast, it is as much as 3 orders of magnitude faster than creating a dedicated container context.

The basic idea is to create a new process for each function invocation that exits and releases the allocated resources immediately when the function finishes. Process creation a) is performed at very high speeds and incurs negligible startup latencies, and b) in contrast to "warm" containers does not block any unused resources. As a consequence of (a), services built on a serverless platform using this invention will experience much higher performances and will scale much quicker compared to the one-function-in-a-container approach; as a consequence of (b), the platform operator can achieve substantially better utilization of the computing resources.

If a developer has a single function only that comprises the service the developer wants to provide to its customers, then this function will be located in its own container different from any other containers. Typically, however, a developer/provider of services will have multiple functions that comprise one or more user-facing services. E.g., assume we'd like to offer a picture modifying service to customers. We have developed two functions, one that scales an input image to a target size, and another that converts an input image to some format. We would preferably group the functions into the same container since they belong to the same app/service and serve the same group of end user. The platform would run both instance managers within a single container. Now imagine that the first function benefits from a high degree of concurrency, whereas the second function does not. I.e., running the functions on a different set of hosts would improve performance, in which case the function managers would run each in its own container on different hosts. Another example might be that we'd like to provide two services, one free and one paid, whereby both services are using a set of common functions, and the paid service some additional functions. In such a case, we could group all free functions into one container, and the paid functions into another container.

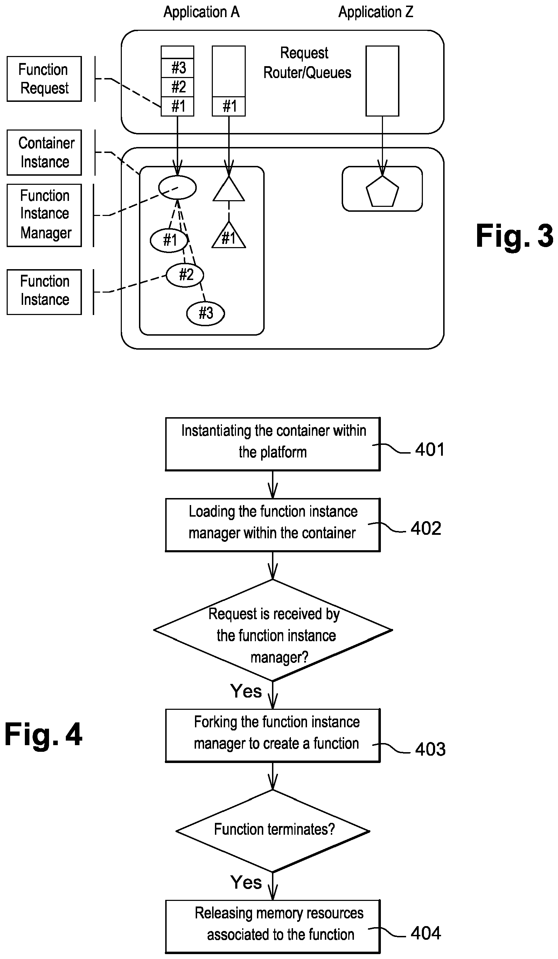

The following section will give an example of how the previously described method can be applied. Consider two applications A and Z, both hosted on a platform that implements the invention object of the present subject matter. The two applications are protected from each other by running in two container instances as depicted in Figure 2, which are instantiated and loaded with the runtime and common libraries when the developers uploaded their application code. Application A is comprised of two functions, Function 1 (round shape) and Function 2 (triangular shape); application Z is comprised of a single function, Function 3 (pentagonal shape). In idle state, when there are no requests that need to be processed, for each function type a function instance manager is loaded in the corresponding application container instance. A function instance manager is a child process of its parent container loaded with the code of the specific function (and dependent code not available from the parent process). Consequently, this will determine the memory footprint in idle state. Figure 3 depicts when there are three incoming requests for Function 1 and one incoming request for Function 2 of Application A, but no request yet for Application Z. The message bus would make these requests available to the corresponding application and the function instance managers. In the depicted example, the instance manager for Function 1 consumes the three incoming requests forking three child processes, one for each request. Similarly, the single request for Function 2 triggers the forking of a corresponding process by its instance manager. As a result, the memory footprint of application A has increased (as indicated by the increased area of the shape in Figure 3). Once the function instances of Application A finish, their resources will be released immediately. As a result, the memory footprint of Application A will return to its original value. On the other hand, there are no requests for Application Z's Function 3. As a result, its memory footprint stays the same as its respective function instance manager.

Using the previously method, there are no system overheads and latencies from continuous suspension and subsequent wake-up of container instances: in a host, a single application container instance remains running during the entire process. The memory footprint of this application container only increases incrementally with every incoming request; as soon as a request has been processed, the corresponding function instance terminates and its resources are released. Note that, even though there is one continuously-running container for an application, its cost (i.e., startup latency and memory footprint) is amortized because it is used to isolate several functions at once. Compared to each function starting and running in its own container (without re-use), this approach is more resource-efficient.

A second embodiment of the present subject matter is a method to allocate/deallocate memory resources on a platform. This platform could be for example a serverless cloud. The platform comprises at least two container. Each container comprises at least one function instance manager. The method is presented figure 4 and comprises:
- A step 401 of instantiating the two containers within the platform
- A step 402 of loading the function instance manager, at least one within each container
When a request is received by one of the function instance managers the method comprises:
- A step 403 of forking the function instance manager to create a function instance and allocating memory resources of the platform to this function instance
When the function instance terminates the method also comprises:
- A step 404 of deallocating the memory resources allocated to this function instance.

The rationale behind the methods of the present subject matter is that instances from the same higher level context (application, tenant, etc.) require stringent protection from other such context, which container technologies can provide but come with the associated cost as previously described. Within such a context, however, the individual functions of the same application can be sufficiently isolated through a light-weight mechanism, i.e., processes. Lowering the isolation between executions of function invocations within in an application/tenant from container to process level provides the significant gains mentioned earlier. In other words we need two levels of isolation: isolation between applications provided by different tenants and isolation between functions of an application belonging to the same tenant. For the first, we need a higher degree of isolation as we need to protect one tenant from functions another tenant executes. For the second, we can trade isolation against performance as there is no need to strongly isolate function executions of a single application belonging to the same tenant. We use container technologies (namespaces and cgroups) to isolate applications (or other context such as tenants) from each other, and isolate individual function invocations of the same application (or for a workflow of functions handling an incoming request for the same application) using processes as motivated in the previous paragraph. Each application (or tenant) may run in its own container, and every function invocation runs as a separate process in the same container namespace. The method of the present subject matter uses a software system to distribute requests to an entity that can accept and process the request and proposes a novel system and mechanism to create processes as requests arrive and deallocate them once a request is finished.

The idea can be summarized as follows:
- Group multiple functions into a container context to use local resource sharing e.g., functions of the same workflow, app, tenant, etc.
- For each function type start a worker process in the container
- Preload function code to reduce startup latency
- For every incoming event fork a new process

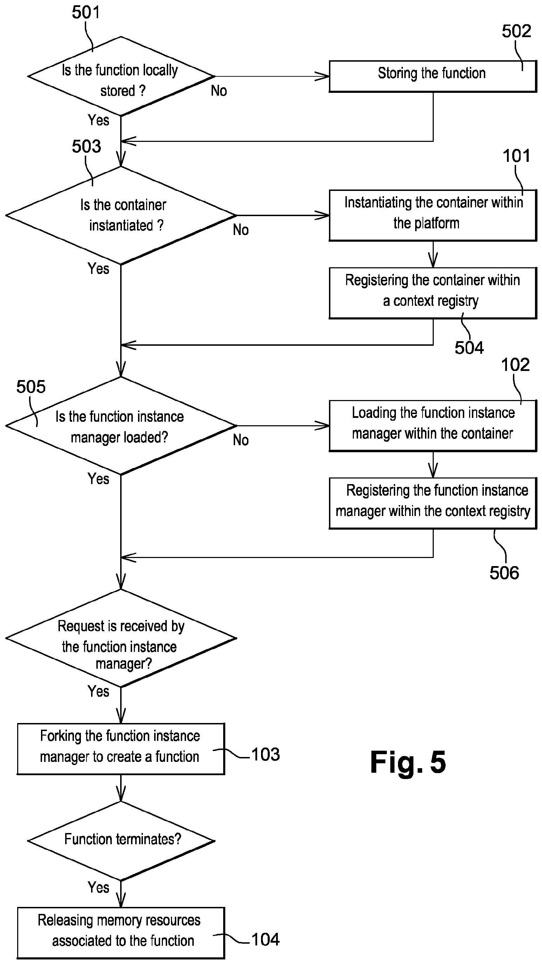

In a further embodiment, presented figure 5, the method of the figure 1 comprises the two following initial steps:
- A step 501 of determining if a code of the function is locally stored and
- A step 502 of storing the code of the function in a local storage if the code of the function was not previously stored and
the method also comprises a step 503 of determining if the container is instantiated within the platform, and if the container is not instantiated within the platform, the method is configured to realize:
- the step 101 of instantiating the container within the platform and
- a step 504 of registering the container within a context registry and
the method also comprises a step 505 of determining if the function instance manager is loaded within the container and if the function instance manager is not loaded within the container, the method is configured to realize:
- the step 102 of loading the function instance manager within the container and
- a step 506 of registering the function instance manager within a context registry.
The local storage allows a copy of the function code to be locally available. This local storage can be for example a local filesystem a data base or any other means of repository The context registry serves for keeping track which containers have been instantiated, their status (e.g., active/paused/stopped), for which tenant, the functions available in the container, etc. This context registry could be for example a look up table or data base.

In an embodiment the steps 503/505 of registering the container/the function instance manager is configured to use a hash table containing:
- An identifier to a metadata of the container/the function instance manager,
- A tenant/application of the container/the function instance manager,
- A status of the container/the function instance manager,
- The loaded functions.
When a container is created for a tenant (or application), the system creates a new entry in the hash table and fills in the metadata as described above.

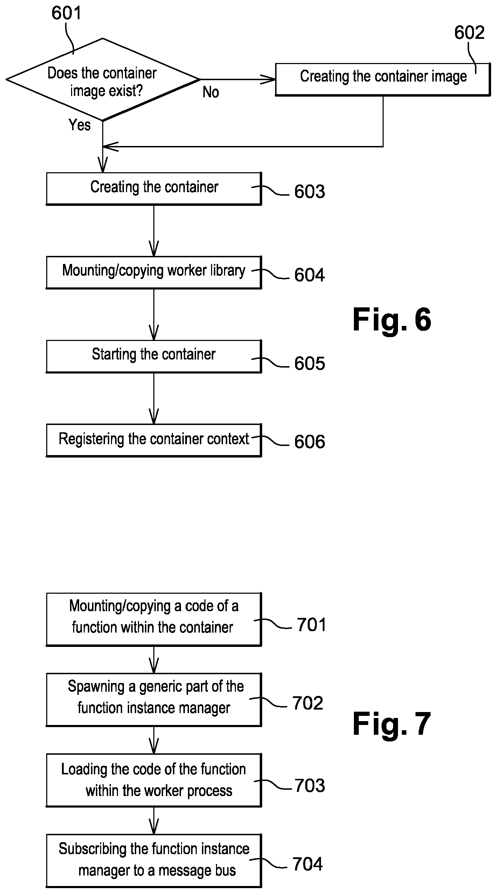

In an embodiment of the present subject matter, presented figure 6, the step 101 of instantiating the container within the platform is configured to realize;
- a step 601 of determining if a container image exists and
- a step 602 of creating the container image, if this container image does not exist, and
- a step 603 of creating the container and
- a step 604 of mounting/copying worker library and
- a step 605 of starting the container and
- a step 606 of registering the container context, within the context registry

In an embodiment of the present subject matter, presented figure 7, the step 102 of loading the function instance manager within the container is configured to realize:
- a step 701 of mounting/copying a code of a function within the container, if this code was not available within the container and
- a step 702 of spawning a process to execute a generic part of the function instance manager and
- a step 703 of loading the code of the function within the generic part of the function instance manager and
- a step 704 of subscribing the function instance manager to a message bus.

There are different methods to make code available to be loaded. One such approach is to store the code in a directory of the local filesystem of the host. Then, when creating container, this folder can be mapped as a volume into the container so that it can be accessed and loaded inside the container. While the generic worker code can be already built into the container image, it could load the function code dynamically from the mapped volume.

In an embodiment the message bus is a software system that provides APIs to create event queues, publish events, subscribe to events, consume events, etc. Thus, the generic code of the worker process implements against this API of the message bus to get informed about or poll for new events. The event type is determined by the specific function the worker process has loaded.

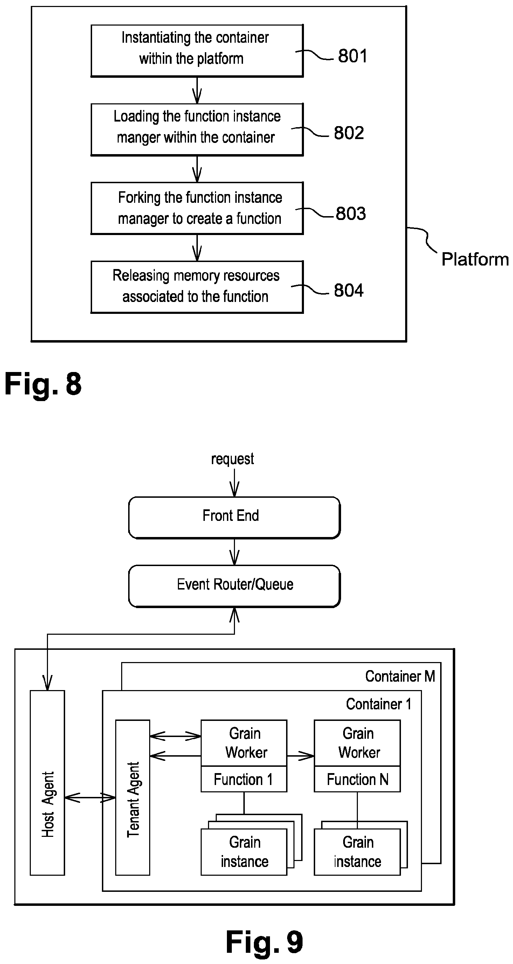

An embodiment of the present subject matter is a platform. This platform could be for example a serverless cloud. The figure 8 presents a first embodiment of this platform. This platform comprises different modules configured to realize the methods previously described. The platform comprises at least one container. The container comprises at least one function instance manager. The platform also comprises:
- A first module 801 configured to instantiate the container within the platform
- A second module 802 configured to load the function instance manager within the container
- A third module 803 configured to fork the function instance manager to create a function instance and allocating memory resources of the platform to this function instance, when a request is received by the function instance manager
- A fourth module 804 configured to deallocate the memory resources allocated to this function instance, when the function instance terminates.

The figure 9 presents a second embodiment of this platform. This platform comprises different modules:
- Host Agent module, with the aims of:
   ∘ Initiate and manage tenant containers.
   ∘ Manages and coordinates publication of locally produced events.
- Tenant Agent module with the aim of:
   ∘ Spawns worker processes and directs them to load function code.
- Function Worker module with the aim of:
   ∘ Loads function code and stays running.
   ∘ Subscribes to queue events.
   ∘ Forks a process per request.
   ∘ Sends produced output events to the host agent.
- Function Instance module with the aim of:
   ∘ Handles single request and terminates.

The different modules will be realized by one or more processors and one or more memory. The module may also be realized by the use of dedicated hardware as well as hardware capable of executing software in association with appropriate software. When provided by a processor, the modules may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter is a computer-readable medium having embodied thereon a computer program configured to realize the method, presented figure 1, to allocate/deallocate memory resources on a platform. This platform could be for example a serverless cloud. The platform comprises at least one container. The container comprises at least one function instance manager. The method is presented figure 1 and comprises:
- A step 101 of instantiating the container within the platform
- A step 103 of loading the function instance manager within the container When a request is received by the function instance manager the method comprises:
- A step 103 of forking the function instance manager to create a function instance and allocating memory resources of the platform to this function instance
When the function instance terminates the method also comprises:
- A step 104 of deallocating the memory resources allocated to this function instance.

## Claims

1. Method to allocate/deallocate resources on a platform, the platform being configured to comprise at least one container, the container being configured to comprise at least one function instance manager, the method comprising:
• A step (101) of instantiating the container within the platform
• A step (102) of loading the function instance manager within the container When a request is received by the function instance manager the method comprising:
• A step (103) of forking the function instance manager to create a function instance and allocating memory resources of the platform to this function instance
When the function instance terminates the method also comprising:
• A step (104) of deallocating the memory resources allocated to this function instance.

2. Method according to the claim 1, also comprising the two following initial steps:
• A step (501) of determining if the function is locally stored and
• A step (502) of storing the function in a local storage if the function was not previously stored and
the method also comprises a step (503) of determining if the container is instantiated within the platform, and if the container is not instantiated within the platform, the method is configured to realize:
• the step (101) of instantiating the container within the platform and
• a step (504) of registering the container within a context registry and
the method also comprises a step (505) of determining if the function instance manager is loaded within the container and if the function instance manager is not loaded within the container, the method is configured to realize:
• the step (102) of loading the function instance manager within the container and
• a step (506) of registering the function instance manager within a context registry.

3. Method according to claims 1 or 2 wherein the step (101) of instantiating the container within the platform is configured to realize:
• a step (601) of determining if a container image exists and
• a step (602) of creating the container image, if this container image does not exist, and
• a step (603) of creating the container and
• a step (604) of mounting/copying worker library and
• a step (605) of starting the container and
• a step (606) of registering the container context, within the context registry

4. Method according to claims 1 or 2 or 3 wherein the step (102) of loading the function instance manager within the container is configured to realize:
• a step (701) of mounting/copying a code of a function within the container, if this code was not available within the container and
• a step (702) of spawning a process to execute a generic part of the function instance manager and
• a step (703) of loading the code of the function within the generic part of the function instance manager and
• a step (704) of subscribing the function instance manager to a message bus.

5. Platform, the platform being configured to comprise at least one container, the container being configured to comprise at least one function instance manager, the platform also comprising:
• A first module (801) configured to instantiate the container within the platform
• A second module (802) configured to load the function instance manager within the container
• A third module (803) configured to fork the function instance manager to create a function instance and allocating memory resources of the platform to this function instance, when a request is received by the function instance manager
• A fourth module (804) configured to deallocate the memory resources allocated to this function instance, when the function instance terminates.

6. Computer-readable medium having embodied thereon a computer program configured to realize a method to allocate/deallocate resources on a platform, for example a serverless cloud, the platform contains at least one container, the container comprising at least one function instance manager, the method comprising:
• A step (101) of instantiating the container within the platform
• A step (102) of loading the function instance manager within the container When a request is received by the function instance manager the method comprising:
• A step (103) of forking the function instance manager to create a function instance and allocating memory resources of the platform to this function instance
When the function instance terminates the method also comprising:
• A step (104) of deallocating the memory resources allocated to this function instance.

7. Computer-readable medium according to the claim 6, wherein the method also comprising the two following initial steps:
• A step (501) of determining if the function is locally stored and
• A step (502) of storing the function in a local storage if the function was not previously stored and
the method also comprises a step (503) of determining if the container is instantiated within the platform, and if the container is not instantiated within the platform, the method is configured to realize:
• the step (101) of instantiating the container within the platform and
• a step (504) of registering the container within a context registry and
the method also comprises a step (505) of determining if the function instance manager is loaded within the container and if the function instance manager is not loaded within the container, the method is configured to realize:
• the step (102) of loading the function instance manager within the container and
• a step (506) of registering the function instance manager within a context registry.

8. Computer-readable medium according to claims 6 or 7 wherein the step (101) of instantiating the container within the platform is configured to realize;
• a step (601) of determining if a container image exists and
• a step (602) of creating the container image, if this container image does not exist, and
• a step (603) of creating the container and
• a step (604) of mounting/copying worker library and
• a step (605) of starting the container and
• a step (606) of registering the container context, within the context registry

9. Computer-readable medium according to claims 6 or 7 or 8 wherein the step (102) of loading the function instance manager within the container is configured to realize:
• a step (701) of mounting/copying a code of a function within the container, if this code was not available within the container and
• a step (702) of spawning a process to execute a generic part of the function instance manager and
• a step (703) of loading the code of the function within the generic part of the function instance manager and
• a step (704) of subscribing the function instance manager to a message bus.
